# EUROPÄISCHE PATENTSCHRIFT

(11) **EP 1 931 503 B1**
(45) Veröffentlichungstag und Bekanntmachung des Hinweises auf die Patenterteilung: **31.03.2010**
(21) Anmeldenummer: 06806010.2
(22) Anmeldetag: 04.10.2006
(51) Int. Cl.: B25J 9/16

(54) **VERFAHREN ZUM BESTIMMEN EINES VIRTUELLEN TOOL-CENTER-POINTS**
METHOD FOR DETERMINING A VIRTUAL TOOL CENTER POINT
PROCEDE POUR DETERMINER UN POINT CENTRAL VIRTUEL D'OUTIL

(30) Priorität: 06.10.2005 DE 102005048136
(43) Veröffentlichungstag der Anmeldung: 18.06.2008
(73) Patentinhaber: KUKA Roboter GmbH, 86165 Augsburg (DE)
(72) Erfinder: KOHLER, Thomas, 86368 Gersthofen (DE)
(74) Vertreter: Lempert, Jost
(86) Internationale Anmeldenummer: PCT/EP2006/009569
(87) Internationale Veröffentlichungsnummer: WO 2007/039278

(56) Entgegenhaltungen:
- EP-A- 1 527 850
- WO-A-98/57782
- WO-A-99/12082

## Beschreibung

Die Ereindung betrifft ein Verfahren zum Bestimmen eines virtuellen Tool-Center-Points bezüglich eines bekannten Ko-ordinatensystems eines Roboters, der einen Mess-Sensor zur Vermessung von Objekten aufweist sowie eine entsprechende Steuerungseinrichtung.

Die WO 98/57782 A1 zeigt ein gattungsgemäßes Verfahren zum Bestimmen eines virtuellen Tool-Center-Points bezüglich eines bekannten Koordinatensystems eines Roboters.

Die EP 1 527 850 A2 zeigt eine Simulationsvorrichtung zum Anordnen und gleichzeitigen Anzeigen zweidimensionaler Modelle von wenigstens einem Roboter, einem Werkstück und einer Bildaufnahmevorrichtung eines virtuellen Sensors auf einem Bildschirm, wobei ein Betrieb des Roboters simuliert wird und dabei Gebrauch einer Sichtfeldanzeige zur dreidimensionalen Anzeige eines Sichtfelds der Bildempfangseinrichtung auf dem Schirm gemacht wird.

Die WO 99/12082 A1 zeigt ein System zum Kalibrieren eines Roboters mit einer Messeinrichtung am freien-Ende eines bewegbaren Roboterarms, einem Ziel (Traget) mit einem vorbestimmten Umfang, Mittel zum Steuern des Roboters zur Bewegung der Messeinrichtung zwecks Durchführung von Messungen des Umfangs des Ziels in einer Vielzahl von Orten und Orientierungen und mit Mitteln zur Kalibrierung des Roboterarms aufgrund der bekannten Form des Ziels und der Vielzahl der durchgeführten Messungen.

Als virtuelle Tool-Center-Points (TCP) werden Raumkoordinaten und -orientierungen bezeichnet, die beispielsweise außerhalb von realen Körpern, wie einem Werkzeug liegen. Solche Punkte liegen frei im Raum und können wegen ihres fehlenden Bezugs zu realen Körpern nicht unmittelbar von einem Roboter angefahren werden. Bspw. bei der Laserbearbeitung mittels Roboter liegt ein virtueller TCP im Focus des Lasers, also frei im Raum und nicht an einem geometrischen Punkt eines realen Körpers. Zum Nachjustieren werden bspw. bei der Laserbearbeitung vorzugsweise Lichtschnitt-Sensoren eingesetzt.

Lichtschnitt-Sensoren werden zum Erfassen von Oberflächen mittels statischer Triangulation eingesetzt. Dabei erzeugt ein Halbleiterlaser mittels einer Linienoptik, wie einer Zylinderlinse, einen flächig aufgefächerten Laserstrahl in Form eines Lichtvorhangs, der auf ein Messobjekt auftrifft und unter dem sogenannten Triangulationswinkel auf eine Kamera mit Signalverarbeitung, wie ein CCD-Array, reflektiert wird. Ein Signalprozessor bestimmt aus den vom Messobjekt reflektierten Laserlinien die räumliche Lage des Messobjekts und eventuelle Kantenübergänge. Der Lichtschnitt-Sensor kann dadurch Abstandsmesswerte und Profilschnitte des Messobjekts zur Verfügung stellen.

Um die vom Lichtschnitt-Sensor zur Verfügung gestellten Werte zur Steuerung eines Roboters bzw. zur Korrektur dessen Roboterprogramms oder allgemein einer Maschine verwenden zu können, sind die vom Lichtschnitt-Sensor zunächst in dessen Sensor-Koordinatensystem zur Verfügung gestellten Messwerte dem Roboter in dessen Roboter-Koordinatensystem oder auch im mit diesem in bekannter Weise in Relation stehenden Weltkoordinatensystem zur Verfügung zu stellen. Dabei wird ein virtueller Sensor-Tool-Center Point - Sensor-TCP - definiert, dessen Position im Sensor-Koordinatensystem definiert ist.

Insbesondere nach einer Demontage und erneuter Wiedermontage des Lichtschnitt-Sensors vom Roboterarm, beispielsweise nach Ausfall eines Sensors und/oder allgemeiner, wenn die Montageposition nicht eindeutig definiert ist, ist die Lage des Sensor-TCP bezüglich des Roboter- bzw. Weltkoordinatensystems meist verschoben. Diese Verschiebung ist zunächst nicht bekannt und soll erfindungsgemäß mit einfachen Mitteln bestimmt werden.

Die WO 98/57782A offenbart ein Verfahren zum Bestimmen eines virtuellen Tool-Center-Points bezüglich eines bekannten Koordinatensystems eines Roboters. Die EP 1 527 850 zeigt eine Stimulations-Vorrichtung mit Anzeige eines dreidimensionalen Models wenigstens eines Roboters und eines Werkstücks und mit Bildaufnahmemitteln in Form eines visuellen Sensors. Die WO 99/12082 bezieht sich auf einen Industrieroboter und eine Messeinrichtung zur Ausführung von Kalibrierungs-Messungen.

Der Erfindung liegt die Aufgabe zugrunde, ein Verfahren anzugeben, mit dem die Lage eines virtuellen Sensor-TCPs bezüglich des Roboter- oder Weltkoordinatensystems in einfacher Weise bestimmt werden kann.

Als Lage wird zumindest die örtliche Position innerhalb eines bekannten Koordinatensystems bspw. X,Y,Z verstanden. Diese kann auch die Orientierungen im Raum wie bspw. die Rotationen A, B, C um die Achsen X,Y,Z umfassen.

Erfindungsgemäß wird die genannte Aufgabe bei einem Verfahren der eingangs genannten Art dadurch gelöst, dass die Lage des virtuellen Tool-Center-Points bezüglich des bekannten Koordinatensystems des Roboters aus der bekannten Lage des virtuellen Tool-Center-Points bezüglich eines Sensor-Koordinatensystems und einer Ermittlung der Roboterachsstellungen für eine Roboterposition bestimmt wird, in welcher der virtuelle Tool-Center-Point in einer Mess-Stelle eines Referenzbauteils liegt.

Bekannte Koordinatensysteme eines Roboters sind bspw. das Weltkoordinatensystem, das sogenannte Roboterkoordinatensystem oder das Handkoordinatensystem. Das Messen der Roboterachsenstellungen erfolgt vorzugsweise durch Teachen mittels in der Robotersteuerung implementierten Teach-Funktionen.

Die Erfindung sieht auch das Bestimmen eines virtuellen TCPs mittels eines Lichtschnitt-Sensors derart vor, dass der virtuelle TCP, dessen Position im Sensor-Koordinatensystem bekannt ist, in hinreichende Übereinstimmung mit einer Mess-Stelle, die im Folgenden auch als Merkmal bezeichnet wird, bspw. eines Referenzbauteils gebracht wird, wobei dieses Merkmal in einem speziellen Anwendungsfall eine "Fügestellen-Geometrie" ist, die eine der gängigen Arten für Schweißnaht-Konstruktionen z.B. ein Überlapp-Stoß, bei dem zwei ebene Bauteile flächig teilweise übereinander liegen, ein T-Stoß, bei dem ein erstes ebenes Bauteil senkrecht zu einem zweiten ebenen Bauteil angeordnet ist und die Stirnseite des ersten Bauteils auf der Flächenebene des zweiten Bauteils anliegt, oder ein I-Stoß, bei dem die Stirnseite des ersten Bauteils an einer Stirnseite des zweiten Bauteils derart anliegt, dass beide Bauteile in derselben Ebene zum Liegen kommen. Verallgemeinert könnte man die Mess-Stelle bzw. das Merkmal eventuell auch als "Unstetigkeit" im Flächenverlauf bezeichnen. Geometrisch definiert es sich dann als Linie oder Kante an einer Ebene mit einer definierten Flächennormalen.

In einer Ausgestaltung der Erfindung ist vorgesehen, dass die Senkrechte zur Fläche des Bauteils durch Triangulation bestimmt wird.

In einer bevorzugten Ausgestaltung des erfindungsgemäßen Verfahrens ist vorgesehen, dass der virtuelle Tool-Center-Point auf Grundlage von Messwerten des Mess-Sensors in die Mess-Stelle des Referenzbauteils bewegt wird, wobei insbesondere der Sensor in eine räumliche Nähe der Mess-Stelle des Referenzbauteils gebracht wird, in der die Mess-Stelle vom Mess-Sensor erfasst wird, dass mittels mindestens eines vom Mess-Sensor gemessenen Positionswertes (Y_{MESS}, Z_{MESS}) der Mess-Stelle ein Lageunterschied zwischen virtuellem Tool-Center-Point und Mess-Stelle im Sensor-Koordinatensystem bestimmt wird, und dass auf Grundlage dieses Lageunterschieds der virtuelle Tool-Center-Point mit der Mess-Stelle in Übereinstimmung hinsichtlich der Position gebracht wird. Vorzugsweise wird dabei der Sensor in eine solche räumliche Nähe der Mess-Stelle des Referenzbauteils gebracht, dass die Mess-Stelle vom Mess-Sensor erfasst werden kann. Sodann wird mittels mindestens eines vom Mess-Sensor gemessenen Orientierungswertes (A_{MESS}, B_{MESS}, C_{MESS}) der Mess-Stelle ein Orientierungsunterschied zwischen virtuellem Tool-Center-Point und Mess-Stelle im Sensor-Koordinatensystem bestimmt wird und weiterhin auf Grundlage dieses Orientierungsunterschieds der virtuelle Tool-Center-Point mit der Mess-Stelle in Übereinstimmung hinsichtlich der Orientierung gebracht wird.

In weiteren alternativen Ausgestaltungen kann vorgesehen sein, dass die Übereinstimmung des virtuellen Tool-Center-Points mit der Mess-Stelle erreicht wird durch Ansteuern des Roboters, bis der virtuelle Tool-Center-Point in der Mess-Stelle liegt oder aber, dass zur Erleichterung des manuell angesteuerten Anfahrens des virtuellen Tool-Center-Points in die Mess-Stelle, eine Information ausgegeben wird, in welcher Weise der Roboter zu verfahren ist, um die Mess-Stelle zu erreichen.

Im Falle der ersten Alternative wird vorzugsweise zur Erleichterung des manuell angesteuerten Anfahrens des virtuellen Tool-Center-Points in die Mess-Stelle eine Information dahingehend ausgegeben, in welcher Weise der Roboter zu verfahren ist, um die Mess-Stelle zu erreichen, während bei der zweiten Alternative die Übereinstimmung durch automatisisertes Ansteuern des Roboters erfolgt, bis der virtuelle Tool-Center-Point in der Mess-Stelle liegt.

Bei vorzugsweiser Verwendung von Lichtschnitt-Sensoren als Mess-Sensoren werden mittels der Mess-Werte derselben mindestens zwei (Y_{MESS}, Z_{MESS}) der Dreiraum-Koordinaten der Mess-Stelle im Sensor-Koordinatensystem und die dritte Raum-Koordinate durch einen Schnitt einer in Richtung der dritten Raum-Koordinate sich durch die Mess-Stelle erstreckenden Gerade unter Ebene eines Lichtvorhangs des Lichtschnitt-Sensors bestimmt.

Mittels der Mess-Werte des Lichtschnitt-Sensors kann so eine Senkrechte (Z_{MESS}) zur Fläche des Referenzbauteils bestimmt werden und weiterhin eine Koordinaten-Richtung (Z_{SENS}) des Sensor-Koordinatensystems durch Ausrichten des Lichtschnitt-Sensors zur Mess-Stellung in Übereinstimmung der Senkrechten (Z_{MESS}) der Fläche des Referenzbauteils gebracht werden.

Eine bevorzugte Weiterbildung des Verfahrens sieht darüber hinaus vor, dass die Mess-Stelle sich in einer Linie oder einer Kante in der Fläche des Referenzbauteils befindet und ein ebener Lichtvorhang des Lichtschnittsensors so lange um eine Senkrechte zur Fläche des Referenzbauteils gedreht wird, bis die durch die Linie oder Kante verursachte Sprungantwort des Lichtschnittsensors verschwindet und diese Orientierung eine erste Winkelstellung bildet, dass der Lichtschnittsensor in entgegengesetzter Richtung gedreht wird, bis die durch die Linie oder Kante verursachte Sprungantwort des Lichtschnittsensors erneut verschwindet und diese neue Orientierung eine zweite Winkelstellung bildet, und die Winkelhalbierende zwischen erster und zweiter Winkelstellung als relevante Winkelorientierung erfasst wird.

Die Erfindung beinhaltet weiterhin, insbesondere zur Durchführung des erfindungsgemäßen Verfahrens eine Steuerungseinrichtung mit einem Anzeigemittel, welches letzteres zum Darstellen der räumlichen Lage eines virtuellen Tool-Center-Points ausgebildet ist.

In bevorzugten Weiterbildungen der erfindungsgemäßen Steuereinrichtung ist darüber hinaus vorgesehen, dass das Anzeigemittel zum Darstellen einer Information über die Richtung ausgebildet ist, in die der Roboter zu verfahren ist, bis der virtuelle Tool-Center-Point in der Mess-Stelle zu liegen kommt und/oder dass das Anzeigemittel zum Darstellen einer Information ausgebildet ist, die anzeigt, wenn der virtuelle Tool-Center-Point in der Mess-Stelle liegt.

Durch die Erfindung wird ein Teachen bei einem virtuellen TCP möglich, der für das menschliche Auge nicht sichtbar ist und deshalb vom Roboterprogrammierer nicht unmittelbar - mechanisch - angefahren werden kann. Mittels des erfindungsgemäßen Verfahrens "sieht" der Lichtschnitt-Sensor für den Roboterprogrammierer. Dies kann am Bediengerät derart visualisiert werden, dass der Roboterprogrammierer über die Darstellungen am Bediengerät den virtuellen TCP anfahren kann.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnungen im Einzelnen erläutert ist. Dabei zeigt:
- Fig. 1: eine Darstellung eines erfindungsgemäßen Roboters mit einem an der Roboterhand angebrachten Lichtschnitt-Sensor und einem Referenzbauteil mit einem Merkmal, dessen Position im Raum bekannt ist;
- Fig.2: eine vergrößerte Darstellung des Lichtschnitt-Sensors mit dem Referenzbauteil der Fig. 1;
- Fig.3: den Lichtschnittsensor der Fig. 2 in einer Seitenansicht; und
- Fig.4: eine erfindungsgemäße Steuerungseinrichtung.

Ein Industrieroboter 1 weist in bekannter Weise einen Sockel 2, ein um eine vertikale A1-Achse drehbares Karussell 3, eine um eine horizontale A2-Achse verschwenkbare-Schwinge 4, einen an deren freien Ende gelenkig um eine horizontale A3-Achse verschwenkbaren Roboterarm 5 mit einer an dessen freien Ende angeordneten Hand 6 mit drei Drehachsen A4 bis A6 auf. Das freie Ende der Hand 6 wird durch einen Flansch 7 gebildet. Die A6-Achse stimmt bei Verschwenken der Hand um die A5-Achse nicht mehr mit der A4-Achse überein, wie es lediglich für den Sonderfall der in der Zeichnung dargestellten gestreckten Position gegeben ist.

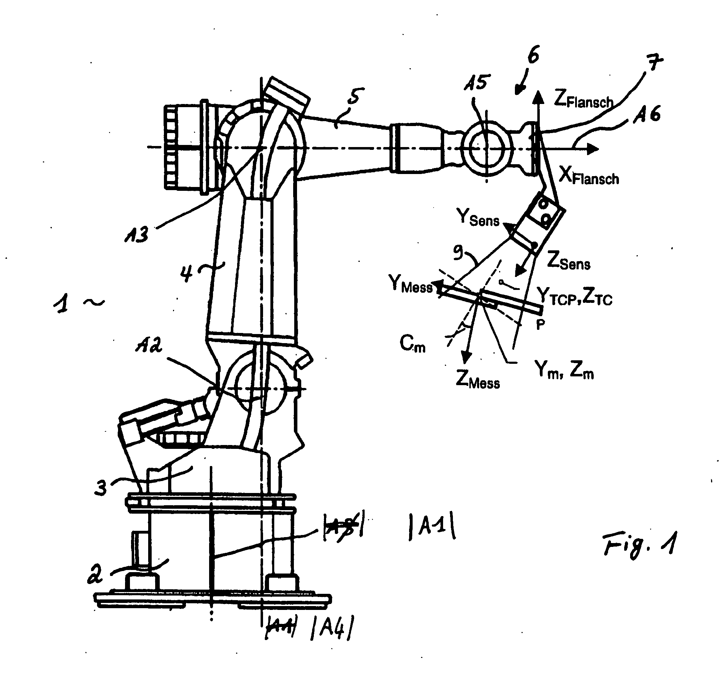

Der Flansch 7 dient zur Befestigung von Werkzeugen. In der Fig. 1 ist an ihm ein Lichtschnitt-Sensor 8 befestigt. Der Lichtschnitt-Sensor 8 weist eine erzeugende Lichtquelle auf, die vorzugsweise in Form eines Halbleiterlasers ausgebildet ist der einen von der Y-Z-Ebene flächig aufgefächerten Laserstrahl 10 in Form eines Lichtvorhangs 9 erzeugt, sowie einen Detektor, wie beispielsweise eine Kamera, vorzugsweise in Form eines CCD-ArraYs.

Der Lichtschnitt-Sensor 8 hat sein eigenes Koordinatensystem. Die Y-Richtung Y_{SENS} und die Z-Richtung Z_{SENS} im Sensor-Koordinatensystem sind in den Figuren dargestellt, während die X-Richtung X_{SENS} bei der dargestellten Ausrichtung senkrecht fest zur Blattebene ausgerichtet ist. Dem Sensor ist ein virtueller Tool-Center-Point - TCP 15 - am Ort X_{TCP}, Y_{TCP}, Z_{TCP} im Sensorkoordinatensystem zugeordnet.

Weiter ist eine Mess-Stelle bzw. ein Merkmal 12 aufweisendes Referenzbauteil 11 dargestellt. Das Merkmal besteht im konkreten Ausführungsbeispiel aus einer Stufe 12 in einem Referenzbauteil 11. Die X-Koordinate X_{MESS} der Mess-Stelle verläuft entlang der Längsrstreckung der Stufe 12. Die Z-Koordinate Z_{MESS} der Mess-Stelle verläuft senkrecht zur Fläche 14 des Referenzbauteils.

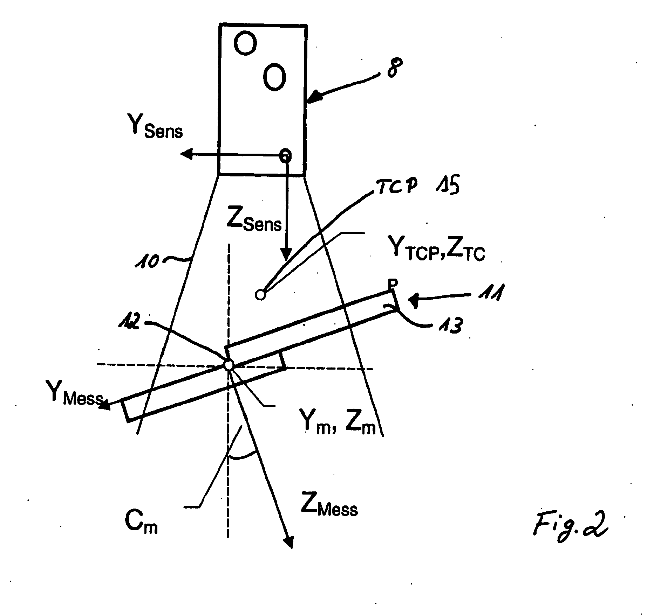

Wie anhand der Fig. 2 ersichtlich ist, wird zunächst die Roboterhand durch Verstellen der einzelnen Roboterachsen derart bewegt, dass das Merkmal 12 in das Blickfeld bzw. Sichtfenster der CCD-Kamera des Sensors gelangt. Der Sensor erzeugt dann ein Signal, dass das Merkmal 12 erkannt wurde. Dieses Erreichen des Zielfensters kann auch beispielsweise an einer Bedieneinheit vorzugsweise optisch oder auch akustisch angezeigt werden. Sobald der Sensor das Merkmal 12 erfasst hat, bestimmt der Lichtschnitt-Sensor 8 die Position des Merkmals 12 sowohl in Y-Richtung Y_{SENS} als auch in Z-Richtung Z_{SENS} des Sensorkoordinatensystems. Aus der IST-Lage des Merkmals 12 bezüglich des Koordinatensystems des Lichtschnitt-Sensors 8 und der mathematisch bekannten Lage des virtuellen TCP 15 bezüglich des Koordinatensystems des Lichtschnitt-Sensors 8 wird der Lageunterschied zwischen Merkmal 12 und virtuellem TCP ermittelt. Anschließend wird der Roboterarm in Richtung Y_{SENS} oder Z_{SENS} vorwärts (+) oder rückwärts (-) bewegt, bis die diesbezüglichen Koordinaten des Merkmals 12 und des virtuellen TCP 15 (hinreichend) übereinstimmen. Der Roboter kann entweder automatisiert von einer Steuerung selbsttätig bewegt werden, oder ein Roboterbediener wird aufgefordert, den Roboter in geeigneter Weise manuell zu bewegen.

Die Annäherung des virtuellen TCP 15zum Merkmal 12 in Z-Richtung Z_{SENS} des Sensor-Koordinatensystems bis zumindest eine näherungsweise Übereinstimmung erfolgt entsprechend, wobei der Ort des Merkmals in Z-Richtung Z_{SENS} durch den Lichtschnittsensor 8 nach dem an sich bekannten Verfahren der statischen Triangulation erfolgt.

Der virtuelle TCP 15 wird so in Übereinstimmung mit dem Merkmal 12, gebracht, wobei dies von Hand oder automatisch erfolgen kann.

Die Übereinstimmung muss nicht exakt hergestellt werden, sondern kann mit einer gewissen Toleranz R erfolgen, wobei die Toleranzbreite in der Größenordnung von bspw. des 1 bis 5-fachen der Sensorauflösung liegen kann, also beispielsweise 1 mm betragen kann. Eine exakte Positionierung ist nicht erforderlich, da mittels bekannter Dreipunkt- und Vierpunktmethoden trotz der angefahrenen unexakten Positionen die tatsächliche Lage des TCPs mathematisch exakt berechnet werden kann.

Die dritte Koordinate X ist stets Null, da der Lichtschnitt-Sensor 8 einen flächigen Strahl, also einen Lichtvorgang erzeugt, der in X-Richtung keine räumliche Ausdehnung hat, also unendlich klein oder dünn ist. Unter der Voraussetzung, dass das System zuvor ein "Merkmal erreicht" und ein Signal erzeugt hat, ist sichergestellt, dass das Merkmal 12 in Y-Richtung in der Ebene des Lichtvorhangs des Lichtschnitt-Sensors 8 liegt.

Insgesamt kann aus der so gemessenen IST-Lage des Merkmals 12 bezüglich des Koordinatensystems des Lichtschnitt-Sensors 8 und der mathematisch bekannten Lage des virtuellen TCPs 15 im Koordinatensystem des Lichtschnitt-Sensors der Lageunterschied zwischen Merkmal 12 und virtuellem TCP 15 ermittelt werden und damit dessen Lage im Welt- oder Roboterkoordinatensystem bestimmt werden.

Es können weiterhin mindestens zwei von drei Winkellagen ermittelt werden.

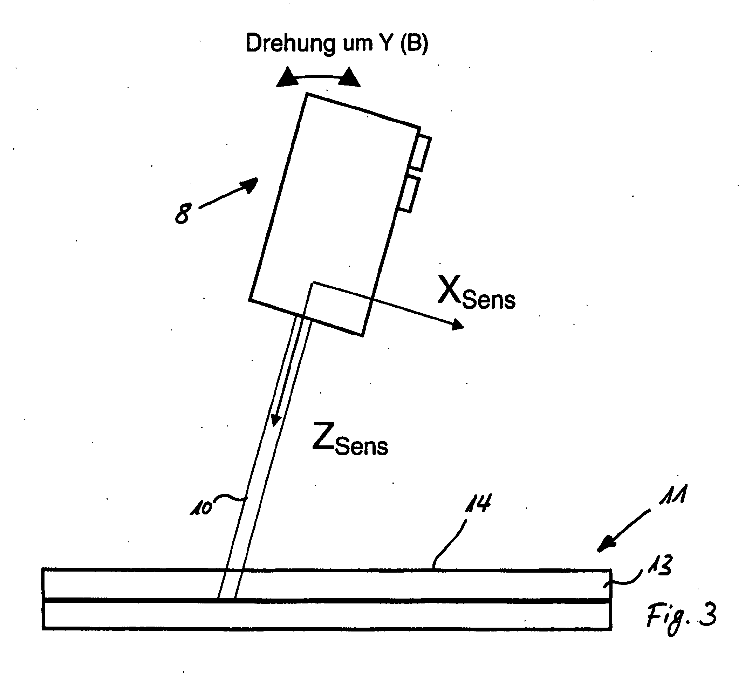

Zum Bestimmen der ersten Winkellage wird, wie in Figur 2 dargestellt, zunächst der flächige Sensorstrahl um eine X-Richtung gegenüber dem Referenzbauteil 11 bzw. dem Merkmal 12, gedreht. Dabei wird mittels des an sich bekannten Triangulationsverfahrens des Lichtschnitt-Sensors 8 die Normale der Fläche des Referenzbauteils 11 rechnerisch bestimmt. Die Z-Richtung Z_{SENS} des sensoreigenen Koordinatensystems ist bekannt. Der Lichtschnitt-Sensor 8 wird verschwenkt und während des Verschwenkens wird die Z-Richtung Z_{SENS} des Lichtschnitt-Sensors 8 relativ zur rechnerisch bestimmten Normalen der Z-Richtung Z_{MESS} des Merkmals 12 gemessen. Die Bewegung erfolgt so lange, bis der Relativwinkel zwischen Z_{SENS} und Z_{MESS} Null wird. Anschließend wird, wie in Figur 3 dargestellt, der Lichtschnittsensor 8 um seine Y-Richtung gedreht und dabei der Abstand zwischen dem Lichtschnittsensor 8 und dem Merkmal 12 gemessen. Die Drehung sollin diejenige Drehrichtung erfolgen, in welche die gemessenen Abstandswerte stetig kleiner werden. Sobald die Messwerte anfangen wieder größer zu werden, ist der Umkehrpunkt erkannt, an dem der Abstand am geringsten ist. In dieser Drehlage steht die Y-Richtung des Lichtschnittsensors 8 senkrecht auf dem Referenzbauteil 11.

Damit stimmt die Z-Richtung Z_{SENS} des Lichtschnitt-Sensors 8 mit der Z-Richtung Z_{MESS} des Merkmals 12 überein.

In einem weiteren Schritt wird ein zweiter Winkel bestimmt. Dazu wird der Lichtschnitt-Sensor 8 um seine eigene Z-Achse Z_{SENS} verdreht, wobei die genannte Achse als Drehachse mit hinreichender Genauigkeit die Kante des Merkmals 12 schneidet. Sobald der flächig aufgefächerte Lichtstrahl des Lichtschnitt-Sensors 8 sich in Y-Richtung Y_{MESS} der Kante befindet, verschwindet die Sprungantwort im vom Lichtschnitt-Sensor 8 erzeugten Signals, die ansonsten aufgrund der Kante gegeben ist und die Winkellage wird erfasst, wodurch die Y-Richtung Y_{SENS} des Lichtschnitt-Sensors 8 in gewisser Übereinstimmung mit der Y-Richtung des Merkmals 12 bzw. der Kante des Referenzbauteils 11 gebracht ist.

Zur Erhöhung der Genauigkeit kann der Lichtschnitt-Sensor 8 in gleicher Richtung oder entgegen der vorherigen Richtung wiederum so lange gedreht werden, bis - diesmal bspw. um 180° verdreht - die Richtung des flächigen Lichtstrahls wiederum mit der Kante übereinstimmt, also wiederum die Sprungantwort verschwindet. Als zweite Winkellage wird die Winkellage zwischen den beiden erfassten (Y-)Winkellagen als zweite Winkelorientierung des virtuellen TCPs 15 erfasst.

Die dritte Winkellage ergibt sich im kartesischen Koordinatensystem als Senkrechte auf die beiden vorher bestimmten Winkellagen.

Der virtuelle TCP 15 befindet sich nun sowohl hinsichtlich seiner drei Orientierungen, als auch hinsichtlich seiner Position im kartesischen Koordinatensystem deckungsgleich zum Merkmal 12 bzw. der Mess-Stelle. Diese Position wird dann durch die üblichen Dreipunkt- oder Vierpunktmethoden erneut geteacht, wodurch eine eindeutige Bestimmung der Lage des virtuellen TCPs 15 im Roboter- oder Weltkoordinatensystem gegeben ist.

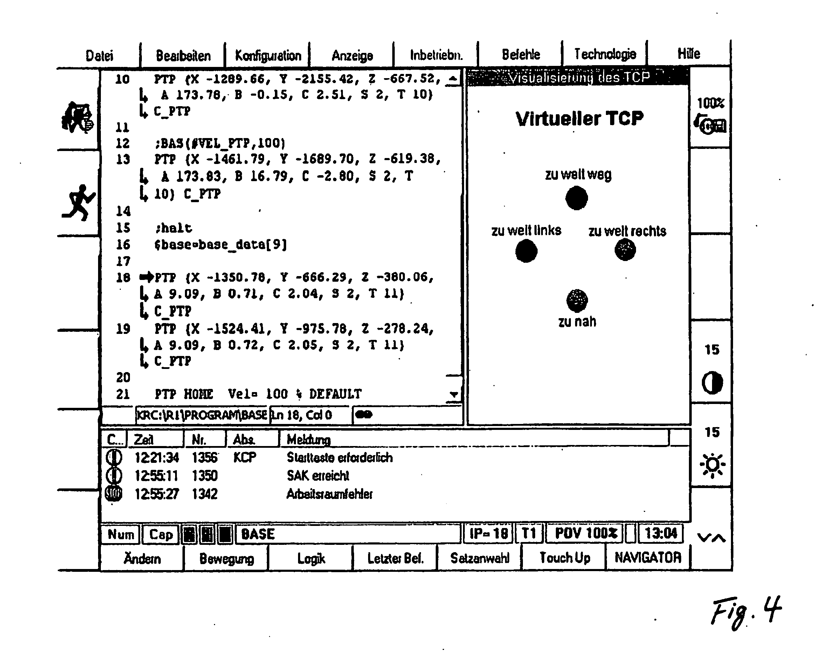

Die Fig. 4 zeigt die Abbildung eines Anzeigemittels einer erfindungsgemäßen Steuerungseinrichtung. Während im linken Teil numerische Informationen angegeben sind und im unteren Bereich Meldungen, ist die erfindungsgemäße Steuerungseinrichtung dazu ausgebildet, im rechten Teil des Anzeigemittels die räumliche Lage eines virtuellen Tool-Center-Points anzuzeigen. Bei der Darstellung der Fig. 4 befindet sich dieser nicht in einer räumlichen Lage eines Mess-Sensors, sondern vielmehr zu weit links und zu weit weg. Demgemäß leuchtet in der Anzeige die Kennung für "zu weit weg" und "zu weit links" auf, wodurch das Nichtvorliegen einer räumlichen Nähe des Mess-Sensors zu einer Mess-Stelle eines Referenzbauteils unter Angabe der Richtung angezeigt wird, in der der Roboter zu verfahren ist, damit der virtuelle Tool-Center-Point in der Mess-Stelle zu liegen kommt. Zur Anzeige liefert der Mess-Sensor die Lage des Merkmals relativ zu seinem Koordinatenursprung zurück. Die Anzeige wird bewirkt durch den Vergleich der gemessenen Positionen mit dem virtuellen Tool-Center-Point, wodurch die notwendige Fahrtrichtung angegeben wird. Wenn der Mess-Sensor in hinreichende räumliche Nähe zu einer Mess-Stelle eines Referenzbauteils zu liegen kommt und die Mess-Stelle demgemäß vom Mess-Sensor erfassbar ist, kann die durch die Anzeige der Mess-Stelle innerhalb der durch die Leuchtpunkte der Anzeige definierten Fläche dargestellt werden und damit eine Information, dass der virtuelle Tool-Center-Point in der Mess-Stelle (unter Berücksichtigung vorgegebener Toleranz bzw. mit hinreichender Nähe) liegt.

### Bezugszeichenliete

- 1: Industrieroboter
- 2: Sockel
- 3: Karussell
- 4: Schwinge
- 5: Roboterarm
- 6: Hand
- 7: Flansch
- 8: Lichtschnitt-Sensor
- 9, 10: Lichtvorhang
- 11: Referenzbauteil
- 12: Merkmal
- 13: Platte
- 14: ebene Fläche
- 15: virtueller TCP

## Patentansprüche

1. Verfahren zum Bestimmen der Lage eines virtuellen Tool-Center-Points (15) bezüglich eines bekannten Koordinatensystems eines Roboters (1) mit einem Roboterarm (5),
**dadurch gekennzeichnet,**
**dass** zunächst der Lageunterschied zwischen einem Merkmal des Referenzbauteils (11) und dem virtuellen Tool-Center-Point (15) bestimmt wird,
**dass** anschließend der Roboterarm (5) bewegt wird, bis die Koordinaten des Merkmals des Referenzbauteils (11) und des virtuellen Tool-Center-Points (15) übereinstimmen, und
**dass** durch Ermittlung der Roboterachsstellungen für diese Lage des virtuellen Tool-Center-Points (15) die Lage des virtuellen Tool-Center-Points (15) im Roboter-koordinatensystem bestimmt wird.

2. Verfahren nach Anspruch 1, **dadurch gekennzeichnet, dass** das Messen der Roboterachsstellungen durch Teachen mittels in der Robotersteuerung implementierter Teach-Funktionen erfolgt.

3. Verfahren nach Anspruch 1 oder 2, **dadurch gekennzeichnet, dass** der virtuelle Tool-Center-Point (15) auf Grundlage von Messwerten des Mess-Sensors in die Mess-Stelle des Referenzbauteils bewegt wird.

4. Verfahren nach einem der Ansprüche 1 bis 3, **dadurch gekennzeichnet, dass** der Sensor in eine räumliche Nähe der Mess-Stelle des Referenzbauteils (11) gebracht wird, in der die Mess-Stelle vom Mess-Sensor erfasst wird,
dass mittels mindestens eines vom Mess-Sensor gemessenen Positionswertes (Y_{MESS}, Z_{MESS}) der Mess-Stelle ein Lageunterschied zwischen virtuellem Tool-Center-Point (15) und Mess-Stelle im Sensor-Koordinatensystem bestimmt wird, und
dass auf Grundlage dieses Lageunterschieds der virtuelle Tool-Center-Point (15) mit der Mess-Stelle in Übereinstimmung hinsichtlich der Position gebracht wird.

5. Verfahren nach Anspruch 4, **dadurch gekennzeichnet, dass** der Sensor in eine räumliche Nähe der Mess-Stelle des Referenzbauteils (11) gebracht wird, in der die Mess-Stelle vom Mess-Sensor erfasst wird,
dass mittels mindestens eines vom Mess-Sensor gemessenen Orientierungswertes (A_{MESS}, B_{MESS}, C_{MESS}) der Mess-Stelle ein Orientierungsunterschied zwischen virtuellem Tool-Center-Point (15) und Mess-Stelle im Sensor-Koordinatensystem bestimmt wird, und
dass auf Grundlage dieses Orientierungsunterschieds der virtuelle Tool-Center-Point (15) mit der Mess-Stelle in Übereinstimmung hinsichtlich der Orientierung gebracht wird.

6. Verfahren nach Anspruch 4 oder 5, **dadurch gekennzeichnet, dass** die Übereinstimmung des virtuellen Tool-Center-Points (15) mit der Mess-Stelle erreicht wird durch Ansteuern des Roboters, bis der virtuelle Tool-Center-Point (15) in der Mess-Stelle liegt.

7. Verfahren nach Anspruch 6, **dadurch gekennzeichnet, dass** zur Erleichterung des manuell angesteuerten Anfahrens des virtuellen Tool-Center-Points (15) in die Mess-Stelle eine Information ausgegeben wird, in welcher Weise der Roboter zu verfahren ist, um die Mess-Stelle zu erreichen.

8. Verfahren nach Anspruch 4 oder 5, **dadurch gekennzeichnet, dass** die Übereinstimmung des virtuellen Tool-Center-Points (15) mit der Mess-Stelle auf rechnerischem Wege erreicht wird, in dem der Lageunterschied und/oder der Orientierungsunterschied zwischen virtuellem Tool-Center-Point (15) und Mess-Stelle in die Positionsdaten eines Roboterprogramms einbezogen werden.

9. Verfahren nach Anspruch 8, **dadurch gekennzeichnet, dass** die Übereinstimmung durch automatisiertes Ansteuern des Roboters erfolgt, bis der virtuelle Tool-Center-Point (15) in der Mess-Stelle liegt.

10. Verfahren nach einem der Ansprüche 1 bis 9, **dadurch gekennzeichnet, dass** als Mess-Sensor ein Lichtschnittsensor (8) verwendet wird.

11. Verfahren nach Anspruch 10, **dadurch gekennzeichnet, dass** mittels der Mess-Werte des Lichtschnittsensors (8) mindestens zwei (Y_{MESS}, Z_{MESS}) der drei Raum-Koordinaten der Mess-Stelle im Sensor-Koordinatensystem bestimmt werden und die dritte Raum-Koordinate durch einen Schnitt einer in Richtung der dritten Raumkoordinate sich durch die Mess-Stelle erstreckende Gerade und der Ebene eines Lichtvorhangs des Lichtschnittsensors (9) bestimmt wird.

12. Verfahren nach Anspruch 10 oder 11, **dadurch gekennzeichnet, dass** mittels der Mess-Werte des Lichtschnittsensors (8) eine Senkrechte (Z_{MESS}) zur Fläche des Referenzbauteils (11) bestimmt wird,
dass eine Koordinaten-Richtung (Z_{SENS}) des Sensor-Koordinatensystems durch Ausrichten des Lichtschnittsensors (8) zur Mess-Stelle in Übereinstimmung mit der Senkrechten (Z_{MESS}) der Fläche des Referenzbauteils (11) gebracht wird.

13. Verfahren nach Anspruch 12, **dadurch gekennzeichnet, dass** die Mess-Stelle sich in einer Linie oder einer Kante in der Fläche des Referenzbauteils (11) befindet und ein ebener Lichtvorhang des Lichtschnittsensors (9) so lange um eine Senkrechte zur Fläche des Referenzbauteils (11) gedreht wird, bis die durch die Linie oder Kante verursachte Sprungantwort des Lichtschnittsensors (8) verschwindet und diese Orientierung eine erste Winkelstellung bildet,
dass der Lichtschnittsensor in entgegengesetzter Richtung gedreht wird, bis die durch die Linie oder Kante verursachte Sprungantwort des Lichtschnittsensors (8) erneut verschwindet und diese neue Orientierung eine zweite Winkelstellung bildet,
und die Winkelhalbierende zwischen erster und zweiter Winkelstellung als relevante Winkelorientierung erfasst wird.

14. Einrichtung zur Durchführung des Verfahrens zum Bestimmen der Lage eines virtuellen Tool-Center-Points (15) bezüglich eines bekannten Koordinatensystems eines Roboters (1), der einen Messsensor zur Vermessung von Objekten aufweist nach einem der vorangehenden Ansprüche, **gekennzeichnet durch** Ausbildung zum Bestimmen der Lage des virtuellen Tool-Center-Points (15) bezüglich des bekannten Koordinatensystems des Roboters aus der bekannten Lage des virtuellen Tool-Center-Points (15) bezüglich eines Sensor-Koordinatensystems und einer Ermittlung der Roboterachsstellungen für eine Roboterposition, in welcher der virtuelle Tool-Center-Point (15) in einer Messstelle eines Referenzbauteils (11) liegt und **durch** Ausbildung eines Anzeigemittels zum Darstellen der räumlichen Lage des virtuellen Tool-Center-Points (15).

15. Steuerungseinrichtung nach Anspruch 14, **dadurch gekennzeichnet, dass** das Anzeigemittel zum Darstellen einer Information über das Vorliegen oder Nichtvorliegen einer räumlichen Nähe eines Mess-Sensors zu einer Mess-Stelle eines Referenzbauteils (11) in der die Mess-Stelle vom Mess-Sensor erfassbar ist, ausgebildet ist.

16. Steuerungseinrichtung nach Anspruch 14 oder 15, **dadurch gekennzeichnet, dass** das Anzeigemittel zum Darstellen einer Information über die Richtung ausgebildet ist, in die der Roboter zu verfahren ist, bis der virtuelle Tool-Center-Point (15) in der Mess-Stelle zu liegen kommt.

17. Steuerungseinrichtung nach Anspruch 14 bis 16, **dadurch gekennzeichnet, dass** das Anzeigemittel zum Darstellen einer Information ausgebildet ist, die anzeigt, wenn der virtuelle Tool-Center-Point (15) in der Mess-Stelle liegt.

## Claims

1. A method of determining the position of a virtual tool centre point (15) relative to a known coordinate system of a robot (1) with a robot arm (5),
**characterised in that**
first of all the difference in position between a feature of the reference component (11) and the virtual tool centre point (15) is determined,
then the robot arm (5) is moved until the coordinates of the feature of the reference component (11) and of the virtual tool centre point (15) coincide, and,
by ascertaining the robot axis positions for this position of the virtual tool centre point (15), the position of the virtual tool centre point (15) in the robot's coordinate system is determined.

2. A method according to claim 1, **characterised in that** measurement of the robot axis positions proceeds by teaching by means of teach functions implemented in the robot control system.

3. A method according to claim 1 or claim 2, **characterised in that** the virtual tool centre point (15) is moved to the measurement point of the reference component on the basis of measured values from the measuring sensor.

4. A method according to any one of claims 1 to 3, **characterised in that** the sensor is brought into a spatial proximity to the measurement point of the reference component (11) at which the measurement point is detected by the measuring sensor,
a difference in position between the virtual tool centre point (15) and the measurement point in the sensor coordinate system is determined by means of at least one position value (Y_{MESS,} Z_{MESS}) , measured by the measuring sensor, of the measurement point, and
the virtual tool centre point (15) is caused to coincide with the measurement point in terms of position on the basis of this difference in position.

5. A method according to claim 4, **characterised in that** the sensor is brought into a spatial proximity to the measurement point of the reference component (11) at which the measurement point is detected by the measuring sensor,
a difference in orientation between the virtual tool centre point (15) and the measurement point in the sensor coordinate system is determined by means of at least one orientation value (A_{MESS}, B_{MESS}, C_{MESS}), measured by the measuring sensor, of the measurement point, and
the virtual tool centre point (15) is caused to coincide with the measurement point in terms of orientation on the basis of this difference in orientation.

6. A method according to claim 4 or claim 5, **characterised in that** coincidence of the virtual tool centre point (15) with the measurement point is achieved by actuating the robot until the virtual tool centre point (15) lies at the measurement point.

7. A method according to claim 6, **characterised in that,** to simplify manually actuated approach of the virtual tool centre point (15) to the measurement point, information is output as to the manner in which the robot is to proceed to reach the measurement point.

8. A method according to claim 4 or claim 5, **characterised in that** coincidence of the virtual tool centre point (15) with the measurement point is achieved computationally by including the difference in position and/or the difference in orientation between the virtual tool centre point (15) and the measurement point in the position data of a robot program.

9. A method according to claim 8, **characterised in that** coincidence is brought about by automated actuation of the robot until the virtual tool centre point (15) lies at the measurement point.

10. A method according to any one of claims 1 to 9, **characterised in that** a light section sensor (8) is used as the measuring sensor.

11. A method according to claim 10, **characterised in that** at least two (Y_{MESS}/Z_{MESS}) of the three spatial coordinates of the measurement point in the sensor coordinate system are determined by means of the measured values of the light section sensor (8) and the third spatial coordinate is determined by intersection of a straight line extending through the measurement point in the direction of the third spatial coordinate with the plane of a light curtain of the light section sensor (9).

12. A method according to claim 10 or claim 11, **characterised in that** a perpendicular (Z_{MESS}) to the surface of the reference component (11) is determined by means of the measured values from the light section sensor (8),
a coordinate direction (Z_{SENS}) of the sensor coordinate system is brought into coincidence with the perpendicular (Z_{MESS}) to the surface of the reference component (11) by aligning the light section sensor (8) relative to the measurement point.

13. A method according to claim 12, **characterised in that** the measurement point is located in a line or an edge in the surface of the reference component (11) and a planar light curtain of the light section sensor (9) is rotated about a perpendicular to the surface of the reference component (11) until the step response of the light section sensor (8) caused by the line or edge disappears and this orientation forms a first angular position,
the light section sensor is rotated in the opposite direction until the step response of the light section sensor (8) caused by the line or edge again disappears and this new orientation forms a second angular position,
and the bisector between the first and second angular positions is identified as a relevant angular orientation.

14. A device for carrying out the method for determining the position of a virtual tool centre point (15) relative to a known coordinate system of a robot (1), which comprises a measuring sensor for measuring objects according to any one of the preceding claims, **characterised by** being configured to determine the position of the virtual tool centre point (15) relative to the known coordinate system of the robot from the known position of the virtual tool centre point (15) relative to a sensor coordinate system and the ascertained robot axis positions for a robot position in which the virtual tool centre point (15) lies at a measurement point of a reference component (11) and by providing a display means for displaying the spatial position of the virtual tool centre point (15).

15. A control device according to claim 14, **characterised in that** the display means is configured to display information about the presence or absence of a spatial proximity of a measuring sensor to a measurement point of a reference component (11) at which the measurement point may be detected by the measuring sensor.

16. A control device according to claim 14 or claim 15, **characterised in that** the display means is configured to display information about the direction in which the robot is to proceed until the virtual tool centre point (15) comes to lie at the measurement point.

17. A control device according to claims 14 to 16, **characterised in that** the display means is configured to display information which indicates when the virtual tool centre point (15) is located at the measurement point.

## Revendications

1. Procédé pour déterminer la position d'un point central virtuel d'outil (15) par rapport à un système de coordonnées connu d'un robot (1) à l'aide d'un bras de robot (5),
**caractérisé en ce que :**
on détermine d'abord la différence de position entre une caractéristique de l'élément de référence (11) et le point central virtuel d'outil (15) ;
le bras de robot (5) est ensuite déplacé jusqu'à ce que les coordonnées de la caractéristique de l'élément de référence (11) et du point central virtuel d'outil (15) coïncident;
le calcul des positions axiales du robot pour cette position du point central virtuel d'outil (15) permet de déterminer la position du point central virtuel d'outil (15) dans le système de coordonnées du robot.

2. Procédé selon la revendication 1, **caractérisé en ce que** la mesure des positions axiales du robot se produit par apprentissage à l'aide de fonctions d'apprentissage programmées dans le système de commande du robot.

3. Procédé selon la revendication 1 ou 2, **caractérisé en ce que** le point central virtuel d'outil (15) est déplacé, sur la base des valeurs mesurées, du capteur de mesure au point de mesure de l'élément de référence.

4. Procédé selon l'une quelconque des revendications 1 à 3, **caractérisé en ce que:**
le capteur est amené à proximité spatiale du point de mesure de l'élément de référence (11) auquel le point de mesure est détecté par le capteur de mesure;
une différence de position entre point central virtuel d'outil (15) et point de mesure est déterminée dans le système de coordonnées du capteur à l'aide d'au moins une valeur de position (Y_{MESS,} Z_{MESS}) mesurée par le capteur de mesure du point de mesure ; et
le point central virtuel d'outil (15) est placé, sur la base de cette différence de position, sur le point de mesure de façon à ce que leurs positions se correspondent.

5. Procédé selon la revendication 4, **caractérisé en ce que :**
le capteur est amené à proximité spatiale du point de mesure de l'élément de référence (11) auquel le point de mesure est détecté par le capteur de mesure ;
une différence d'orientation est déterminée entre le point central virtuel d'outil (15) et le point de mesure dans le système de coordonnées du capteur à l'aide d'au moins une valeur d'orientation (A_{MESS}, B_{MESS}, C_{MESS}) mesurée par le capteur de mesure du point de mesure ;
sur la base de cette différence d'orientation, le point central virtuel d'outil (15) est amené en concordance avec le point de mesure quant à l'orientation.

6. Procédé selon la revendication 4 ou 5, **caractérisé en ce que** la concordance du point central virtuel d'outil (15) avec le point de mesure est atteinte par pilotage du robot jusqu'à ce que le point central virtuel d'outil (15) se trouve dans le point de mesure.

7. Procédé selon la revendication 6, **caractérisé en ce que** pour faciliter le déplacement commandé à la main du point central virtuel d'outil (15) dans le point de mesure, une information est fournie contenant la façon dont le robot doit être actionné pour atteindre le point de mesure.

8. Procédé selon la revendication 4 ou 5, **caractérisé en ce que** la concordance du point central virtuel d'outil (15) avec le point de mesure est atteinte par calcul, par intégration de la différence de position et/ou de la différence d'orientation entre le point central virtuel d'outil (15) et le point de mesure dans les données de position d'un programme de robot.

9. Procédé selon la revendication 8, **caractérisé en ce que** la concordance par pilotage automatisé du robot continue jusqu'à ce que le point central virtuel d'outil (15) atteigne le point de mesure.

10. Procédé selon l'une quelconque des revendications 1 à 9, **caractérisé en ce que** le capteur de mesure est un capteur de coupe optique (8).

11. Procédé selon la revendication 10, **caractérisé en ce que,** à l'aide des valeurs mesurées du capteur de coupe optique (8), au moins deux coordonnées (Y_{MESS,} Z_{MESS}) parmi les trois coordonnées spatiales du point de mesure sont déterminées dans le système de coordonnées du capteur et que la troisième coordonnée spatiale est déterminée par l'intersection d'une droite s'étendant à travers le point de mesure en direction de la troisième coordonnée spatiale et du plan d'un rideau lumineux du capteur de coupe optique (9).

12. Procédé selon la revendication 10 ou 11, **caractérisé en ce que :**
une perpendiculaire (Z_{MESS}) à la surface de l'élément de référence (11) est déterminée à l'aide des valeurs mesurées du capteur de coupe optique (8) ;
une direction cardinale (Z_{SENS}) du système de coordonnées du capteur est amenée, par alignement du capteur de coupe optique (8) avec le point de mesure, en correspondance avec la perpendiculaire (Z_{MESS}) de la surface de l'élément de référence (11).

13. Procédé selon la revendication 12, **caractérisé en ce que :**
le point de mesure se trouve dans une ligne ou une arête dans la surface de l'élément de référence (11) et qu'un rideau lumineux plan du capteur de coupe optique (9) est tourné autour d'une perpendiculaire à la surface de l'élément de référence (11) jusqu'à ce que la réponse par saut du capteur de coupe optique (8) provoqué par la ligne ou l'arête disparaisse et que cette orientation forme une première position angulaire ;
le capteur de coupe optique est tourné dans la direction opposée jusqu'à ce que la réponse par saut du capteur de coupe optique (8) provoquée par la ligne ou l'arête disparaisse de nouveau et que cette nouvelle orientation forme une deuxième position angulaire ; et
la bissectrice entre la première et la seconde position angulaire est détectée par une orientation angulaire pertinente.

14. Dispositif d'introduction du procédé pour déterminer la position d'un point central virtuel d'outil (15) par rapport à un système de coordonnées connu d'un robot (1) qui comporte un capteur de mesure pour mesurer des objets selon l'une quelconque des revendications précédentes, **caractérisé par** le développement permettant de déterminer la position du point central virtuel d'outil (15) par rapport au système de coordonnées connu du robot à partir de la position connue du point central virtuel d'outil (15) par rapport à un système de coordonnées du capteur et à une détermination des positions axiales du robot pour une position de robot dans laquelle le point central virtuel d'outil (15) se situe à un point de mesure d'un élément de référence (11) et par développement d'un affichage de représentation de la position dans l'espace du point central virtuel d'outil (15).

15. Dispositif de commande selon la revendication 14, **caractérisé en ce que** les moyens d'affichage sont réalisés pour représenter une information relative à la présence ou à l'absence d'une proximité spatiale d'un capteur de mesure par rapport à un point de mesure d'un élément de référence (11) dans lequel le point de mesure peut être détecté par le capteur de mesure.

16. Dispositif de commande selon la revendication 14 ou 15, **caractérisé en ce que** les moyens d'affichage sont réalisés pour représenter une information relative à la direction dans laquelle le robot doit être déplacé pour faire correspondre le point central virtuel d'outil (15) avec le point de mesure.

17. Dispositif de commande selon la revendication 14 à 16, **caractérisé en ce** les moyens d'affichage sont réalisés pour représenter une information indiquant lorsque le point central virtuel d'outil (15) se trouve dans le point de mesure.
